# EUROPEAN PATENT SPECIFICATION

(11) **EP 4 400 075 B1**
(45) Date of publication and mention of the grant of the patent: **06.05.2026**
(21) Application number: 22864312.8
(22) Date of filing: 22.08.2022
(51) Int. Cl.: A61C 19/04, A61C 19/10, A61C 13/00, A61C 5/77

(54) **INSTRUMENT KIT, METHOD OF ADOPTING A MILLING BLOCK TO BE USED FOR FORMING A CROWN BY COMPUTER-AIDED DESIGN AND A METHOD FOR DETERMINING A SHAPE OF AN OPEN CAVITY OF A CROWN**
INSTRUMENTENSATZ, VERFAHREN ZUR VERWENDUNG EINES FRÄSBLOCKS ZUR HERSTELLUNG EINER KRONE MITTELS COMPUTERGESTÜTZTER KONSTRUKTION UND VERFAHREN ZUR BESTIMMUNG DER FORM EINER OFFENEN KAVITÄT EINER KRONE
KIT D'INSTRUMENTS, MÉTHODE D'ADAPTATION D'UN BLOC DE FRAISAGE DESTINÉ À LA FABRICATION D'UNE COURONNE PAR CONCEPTION ASSISTÉE PAR ORDINATEUR ET MÉTHODE DE DÉTERMINATION DE LA FORME D'UNE CAVITÉ OUVERTE D'UNE COURONNE

(30) Priority: 06.09.2021 JP 2021144884
(43) Date of publication of application: 17.07.2024
(73) Proprietor: Tokuyama Dental Corporation, Tokyo 110-0016 (JP)
(72) Inventor: NAGASAWA, Yuko, Tokyo 110-0016 (JP); MIMAKI, Hidenori, Tokyo 110-0016 (JP)
(74) Representative: Markfort, Iris-Anne Lucie
(86) International application number: PCT/JP2022/031526
(87) International publication number: WO 2023/032728

(56) References cited:
- JP-A- 2009 160 086
- JP-A- 2018 095 620
- JP-A- 2019 211 704
- JP-A- H0 531 127
- JP-A- H0 531 127
- US-A1- 2010 221 682
- US-A1- 2010 244 294
- US-A1- 2016 000 524
- US-A1- 2021 251 733

## Description

### Technical Field

The present invention relates to a crown appearance color confirming method of confirming a color tone of a tooth crown (crown) having a predetermined appearance color, the crown being a kind of a dental prosthesis made of a non-metal material such as a hybrid resin, when the crown is actually mounted onto an abutment tooth of a patient, an instrument kit that can be suitably used for the method, a demonstration instrument including the instrument kit, and the like.

### Background Art

Dental prostheses used for dental treatment are generally formed by casting a metal material such as gold, silver, titanium, or a palladium alloy, formed by processing a non-metal material such as ceramics or a hybrid resin, or formed by making a core portion from a metal material and making a superficial layer portion such as a facing portion from a non-metal material. Note that a hybrid resin (hereinafter, abbreviated as "HR" in some cases) means a composite material in which inorganic infill (hereinafter, also referred to as "inorganic filler") is dispersed in a resin matrix at a high density. Usually, the hybrid resin is obtained by polymerizing and curing a paste-like polymerizable curable composition containing a polymerizable monomer, an inorganic filler, and a polymerization initiator by pressurizing, heating, and the like.

Dental prostheses entirely formed of a non-metal material have advantages of eliminating a concern about metal allergy and being excellent in aesthetics, and additionally, have been easily processed due to the recent development of digital image technologies or computer processing technologies. Thus, the demand for the dental prostheses has been rapidly increasing. For example, as disclosed in JP 6004769 B2, a computer-aided design (CAD)/computer-aided manufacturing (CAM) system has been widely used, in which a CAD/CAM apparatus based on the CAD and CAM technologies is used to perform cutting processing on a "CAD/CAM milling block" (also referred to as a dental processing blank in some cases) made of a non-metal material and to form a dental prosthesis on the basis of a captured image of an oral cavity. Here, the CAD/CAM milling block means a cut body (also referred to as a milling blank) that is attachable to a cutting machine in the CAD/CAM system, and usually includes a cut portion and a holding portion for enabling the cut portion to be attached to a cutting machine. As the cut portion, a (solid) block formed into a rectangular parallelepiped shape or columnar shape, a (solid) disk formed into a plate-like or disc-like shape, and the like are generally known. A milling blank including a cut portion made of a hybrid resin (hereinafter, a CAD/CAM milling block made of HR will also be simply referred to as "HR milling block") is also known.

Incidentally, in order to achieve highly aesthetic restoration, it is necessary to determine the color (specified by hue, brightness, and saturation, that is, hue and color tone) of a tooth to be restored (restored tooth) or the color of surrounding teeth (such color determination is referred to as "shade taking" in some cases), select an HR milling block including a cut portion having a color that matches the determined color, and perform the restoration. Note that the shade taking is generally performed using a color tone sample for teeth, which is called a shade guide. There are various shade guides in which the number of color samples, the configuration of a holding instrument that holds the color samples, and the like are designed to facilitate color determination. Among them, "VITA Classical" (trade name) manufactured by VITA, which includes samples of total of 16 colors (a color specified by an index including a combination of hue and a mixed index of brightness and saturation or by an index considering hue, brightness, and saturation will also be referred to as "shade") and is capable of determining the color of a site to be restored by comparing the shade guide with the colors of the site to be restored and surrounding teeth, is the most prevalent (see JP 6004769 B2). Further, in addition to the above, a plurality of types of white tones, which are called bleach shades and simulate a state after whitening, are also used in some cases.

Note that, in the VITA shade guide, the colors of A to D systems are classified according to brightness and are represented by marks. In other words, the colors are classified into the A system (red brown), the B system (red yellow), the C system (ash), and the D system (red ash), and when 16 shades are arranged in the order of brightness (high to low in brightness), the following order is obtained:
"B1→A1→B2→D2→A2→C1→C2→D4→A3→D3→B3→A3.5→B4→C3→A4→C4".

HR blanks include a single-color blank including a cut portion made of a single HR layer (hereinafter, also referred to as "single-layer HR milling block"), and a blank including a plurality of HR layers having different colors (hereinafter, also referred to as "laminated HR milling block"). In each case, some shades selected from among the 16 shades described above are often prepared as basic shades (by the number of basic shades). In other words, in the single-layer HR milling block, the surface color pattern of the cut portion of the HR milling block has a specific single basic shade (color) on the entire surface, or in the laminated HR milling block, the surface color pattern of the cut portion of the HR milling block has a specific basic shade in one of the layers constituting the laminate and a shade other than the basic shade and/or colors other than the 16 shades in the other layers. As a result, colors are separated by a plurality of specific colors different from each other depending on the layer structure.

If the shade taking is performed and a milling block having a harmonizing shade is selected, restoration (treatment) with less discomfort can also be performed using a crown manufactured from the single-layer HR milling block. However, if highly aesthetic restoration is performed so as to faithfully reproduce a change in color at each site of a tooth, restoration (treatment) is favorably performed using a crown manufactured from the laminated HR milling block.

As the laminated HR milling block as described above, for example, WO 2009/154301 A1 discloses the following dental prosthesis processing block: excellent in an aesthetic effect; excellent in mechanical strength without performing special processing such as coating processing; stably usable for a long period of time; excellent in processability such as cutting or grinding; having no bubbles left in the block; rigidly bonding resin layers to each other without involving a pressurizing step when the block is formed by superimposing a plurality of resin layers; having a color tone close to a natural color and including a further improved aesthetic effect; having a gradation in the color tone. Further, as a dental CAD/CAM cutting block that is excellent in general-purpose versatility and productivity and also has high reproducibility of the beauty of a natural tooth, JP 2017 213394 A discloses a dental CAD/CAM cutting block that is a dental CAD/CAM resin-based block in which a dentin-restoring resin layer and an enamel-restoring resin layer are laminated, and at least the dentin-restoring resin layer contains light-diffusing particles and has a contrast ratio and a diffusion ratio that are adjusted in respective specific ranges. Further, JP 2017 113224 A discloses a laminated milling blank that has high aesthetics and high mechanical strength.

Further, examples of a CAD/CAM milling block other than the HR milling block including a cut portion made of a non-metal material include a so-called zirconia dental processing blank. Usually, such a milling block includes a single layer and is used by being selected from milling blocks having a plurality of shades by shade taking. This holds true for the single-layer HR milling block.

From JP H0531127 A there is known color tone adjustment of crown restoration of an actual crown to be used for a patient. In a first step an impression of a base tooth is sampled and a superhard gypsum is run into the impression to make a working model. Then, the working model is used to make a translucent crown restoration. On the other hand, the working model containing at least a base tooth part is dyed in the same color as an adhesive for joining to be used for bonding the crown restoration on the base tooth. The adhesive for joining is colored pale yellow brown in approximation to an enamel to make the translucent crown restoration resemble a natural tooth. The crown restoration is mounted on the base tooth part of the working model colored and the color tone of the crown restoration is adjusted. In the adjustment of the color tone, a mixture of a pigment and a glass powder kneaded by a solvent is applied on the surface of the crown restoration, and then calcined.

Moreover, US 2010/244294 A1 discloses a dental article such as a an actual crown to be used in a patient, the crown being fabricating by layering one or more preformed shells of SMC material onto an understructure. The understructure may be fabricated from any suitably strong material for use in replacing dentition. At the same time, a number of SMC shells may be used to provide a finished dental article having a natural-looking, multi-chromatic appearance. The SMC material(s) may be cured to provide an exterior hardness suitable for use in dental applications.

### Disclosure of Invention

### Technical Problem

When a dentist performs treatment on a patient by using a crown that is a tooth crown prosthesis including a cavity into which an abutment tooth is to be inserted, if selection by shade taking using the CAD/CAM milling block (dental processing blank) made of a non-metal material is performed, the selection is usually performed on the basis of an appearance color of the CAD/CAM milling block before subjected to cutting processing.

However, an appearance color tone of the crown when viewed alone and an appearance color tone of the crown when mounted on the abutment tooth of the patient are different from each other in many cases. When the crown manufactured from the selected CAD/CAM milling block is actually mounted onto the patient's abutment tooth (tooth in the form obtained by cutting/forming a tooth to be treated so as to match the crown), a desired color tone harmony is not obtained relatively in many cases.

In this regard, the present disclosure aims at providing a method of previously confirming an appearance color of a crown after mounted onto an abutment tooth of a patient, the crown being manufactured by CAD/CAM using a milling block made of a non-metal material and having a specific surface color pattern, an instrument kit suitably used for the method, and the like.

### Solution to Problem

The present invention is to solve the above problems, and a first aspect of the present invention is an instrument kit with the features of claim 1 including: at least one abutment tooth sample that is configured as an exemplar of an abutment tooth of a patient and includes an abutment tooth portion formed into a standard shape of the abutment tooth; and at least one crown sample that is configured as an exemplar of a crown, the crown being a tooth crown prosthesis including an open cavity into which the abutment tooth is to be inserted, the at least one crown sample being formed into a standard shape of the crown and including an open cavity corresponding to the abutment tooth portion of the abutment tooth sample, in which the instrument kit includes at least one of a plurality of abutment tooth samples or a plurality of crown samples, the plurality of abutment tooth samples constitutes at least one of a first abutment tooth sample group or a second abutment tooth sample group, the first abutment tooth sample group including the abutment tooth portions having shapes substantially identical to each other and having surface color patterns different from each other, the second abutment tooth sample group including the abutment tooth portions having surface color patterns substantially identical to each other and having shapes different from each other, and the plurality of crown samples constitutes at least one of a first crown sample group or a second crown sample group, the first crown sample group including the crown samples having shapes substantially identical to each other and having surface color patterns different from each other, the second crown sample group including the crown samples having surface color patterns substantially identical to each other and having shapes different from each other.

The surface color patterns of the at least one abutment tooth sample and the at least one crown sample may be configured using a plurality of colors including a color corresponding to one selected from 18 shades representing a color of a tooth.

The at least one crown sample may be formed by the CAD/CAM using a milling block that is made of a hybrid resin or ceramics.

In the instrument kit, the at least one abutment tooth sample may further include a pinch portion that extends from the abutment tooth portion to an opposite side in a direction of insertion into the open cavity.

The instrument kit is used for previously confirming an appearance color of the crown after the crown is mounted onto the abutment tooth of the patient, the crown being formed by the CAD/CAM using a milling block substantially identical to a milling block used for forming the crown sample.

The instrument kit may include the first abutment tooth sample group and the first crown sample group, and the shapes of the abutment tooth portions of the plurality of abutment tooth samples constituting the first abutment tooth sample group may coincide with the shapes of the open cavities of the plurality of crown samples constituting the first crown sample group on a one-to-one basis.

The instrument kit may include the second abutment tooth sample group and the second crown sample group, and the plurality of crown samples constituting the second crown sample group may include crown samples including the open cavities having shapes corresponding to all the shapes of the abutment tooth portions of the plurality of abutment tooth samples constituting the second abutment tooth sample group.

Another aspect of the present invention is a method of adopting a milling block to be used for forming a crown by computer-aided design (CAD) /computer-aided manufacturing (CAM) with the features of claim 7.

In the confirming step, an image or image data obtained by imaging appearances of the plurality of crown samples may be used, the image or image data being obtained before and after the abutment tooth portion of the abutment tooth sample is inserted into the open cavity of each of the plurality of crown samples.

A third aspect of the present invention is a method for determining a shape of an open cavity with the features of claim 9.

In the confirming step, an image or image data obtained by imaging an appearance of the crown sample may be used, the image or image data being obtained before and after the abutment tooth portion of the abutment tooth sample is inserted into the open cavity of the crown sample.

### Advantageous Effects of Invention

According to the crown appearance color confirming method of the present disclosure, for example, using an abutment tooth sample including an abutment tooth portion having a shade (color) determined by performing shade taking for a color of an abutment tooth of a patient, the abutment tooth portion is inserted into an open cavity of a crown sample to previously confirm an appearance color thereof, so that compatibility of the color tone of a crown at the time of treatment can be confirmed, the crown being manufactured by CAD/CAM using a milling block substantially identical to a milling block used for manufacturing the crown sample.

Therefore, it is possible to adopt a milling block to be used by CAD/CAM after expecting an actual finished state.

### Brief Description of Drawings

Fig. 1 shows a front view, a plan view, a bottom view, a right-side view, and a longitudinal sectional view of a representative crown sample in an instrument kit of the present invention.
Fig. 2 shows right-side views of two types of representative abutment tooth samples in the instrument kit of the present invention.
Fig. 3 is a photograph of a demonstration instrument according to one embodiment of the present invention.
Fig. 4 is a photograph showing a state in which an abutment tooth portion of the abutment tooth sample is inserted into an open cavity of the crown sample in the demonstration instrument shown in Fig. 3.
Fig. 5 is a photograph showing a first abutment tooth sample group that is suitably used in the demonstration instrument of the present invention.
Fig. 6 is a photograph showing a demonstration instrument according to another embodiment of the present invention.

### Mode(s) for Carrying Out the Invention

The inventors of the present invention have considered the following reasons why a desired color tone harmony cannot be obtained at the time of mounting a crown irrespective of the fact that the crown is manufactured by CAD/CAM using a milling block selected by previously performing shade taking: (1) how an appearance color is seen is affected by the thickness of a material; and (2) a non-metal material has a certain degree of transparency even if it is colored, and thus if the material is thin, the color of a base is seen through the material and the appearance color is changed. If a crown sample processed into a shape equivalent to an actual crown is mounted onto an abutment tooth sample having a color equivalent to an actual color of an abutment tooth of a patient, and the appearance color of the crown sample is confirmed, evaluation of the appearance color can be reliably performed when restoration (treatment) is performed using an actual crown. On the basis of such an idea, the inventors of the present invention have studied a method for simply and reliably performing such a confirmation. The present invention have been made as a result of such studies.

A milling block to be evaluated is not particularly limited as long as it includes a cut portion made of a non-metal material. From the viewpoint of effectiveness, a milling block made of a hybrid resin (HR) or ceramics such as zirconia is suitable. In particular, from the viewpoint of allowing highly aesthetic restoration, a laminated HR milling block is particularly suitable, and an E-M-D laminated HR milling block in which an enamel layer E, a middle HR layer M, and a dentin layer D are laminated is the most favorable. Here, the enamel layer E means an HR layer having a color corresponding to an appearance color of an enamel portion in which dentin is not present in the base. The dentin layer D means an HR layer having a color corresponding to an appearance color of the enamel portion in a portion in which dentin is present in the base. The middle HR layer M means an HR layer having an intermediate color between the colors of the enamel layer E and the dentin layer D. Note that the middle HR layer M usually includes one to three layers. If the middle HR layer M includes two layers or three layers, it is favorable that the middle HR layers M have colors different from each other and are laminated layers having gradations of color.

Further, the crown to be the target of the present invention may be used for any one of an anterior tooth, a canine tooth, a bicuspid tooth, and a molar tooth, but it is favorably a crown for the anterior tooth from the viewpoint that highly aesthetic restoration is required and an effect of the present invention is highly exhibited.

A crown appearance color confirming method of the present disclosure includes a preparing step and a confirming step. In the preparing step, an instrument kit 1 of the present invention or a demonstration instrument 30 of the present invention is prepared. The crown appearance color confirming method of the present disclosure may also be referred to as a using form of the instrument kit 1 of the present invention or the demonstration instrument 30 of the present invention. Further, the demonstration instrument 30 of the present invention includes the instrument kit 1 of the present invention. The instrument kit 1 includes a combination of an abutment tooth sample 20 and a crown sample 10, as instruments constituting the instrument kit 1. The abutment tooth sample 20 includes an abutment tooth portion 21 that has a surface color pattern substantially identical to that of an abutment tooth of a patient and is formed into a standard shape of the abutment tooth. The crown sample 10 has a surface color pattern substantially identical to that of a crown, is formed into a standard shape of the crown by CAD/CAM using a milling block substantially identical to a milling block to be used for forming the crown, and includes an open cavity 11 corresponding to the abutment tooth portion 21 of the abutment tooth sample 20. Here, in the present invention, the wording "substantially identical" means a configuration obtained on the basis of a design intended to be identical, and a configuration in which only a difference of a degree that is unavoidable in the manufacturing process is present is also included in "substantially identical". In the confirming step, an appearance color of the crown sample 10 is confirmed before and after the abutment tooth portion 21 of the abutment tooth sample 20 is inserted into the open cavity 11 of the crown sample 10 constituting the instrument kit 1. The crown appearance color confirming method of the present invention can be configured as a real confirming method of visually confirming the appearance color of the crown sample 10 in the confirming step or as an image confirming method using an image or image data obtained by imaging the appearance of the crown sample 10 before and after the abutment tooth portion 21 of the abutment tooth sample 20 is inserted into the open cavity 11 of the crown sample 10 in the confirming step. In the image confirming method, a catalog photograph, a moving image, or the like showing the outer appearance of the crown sample 10 can also be used as the image or image data. As described above, in the crown appearance color confirming method of the present disclosure, it is possible to previously confirm an appearance color of a crown after mounted onto a abutment tooth of a patient, the crown being formed by CAD/CAM using a milling block substantially identical to a milling block used for forming the crown sample 10. Hereinafter, the instrument kit 1 of the present invention and the crown appearance color confirming method of the present invention will be described together with the description of the demonstration instrument 30 of the present invention with reference to the drawings, exemplifying a case where an appearance color of a crown for an anterior tooth after mounted is previously confirmed, the crown being manufactured from an E-M-D laminated HR milling block.

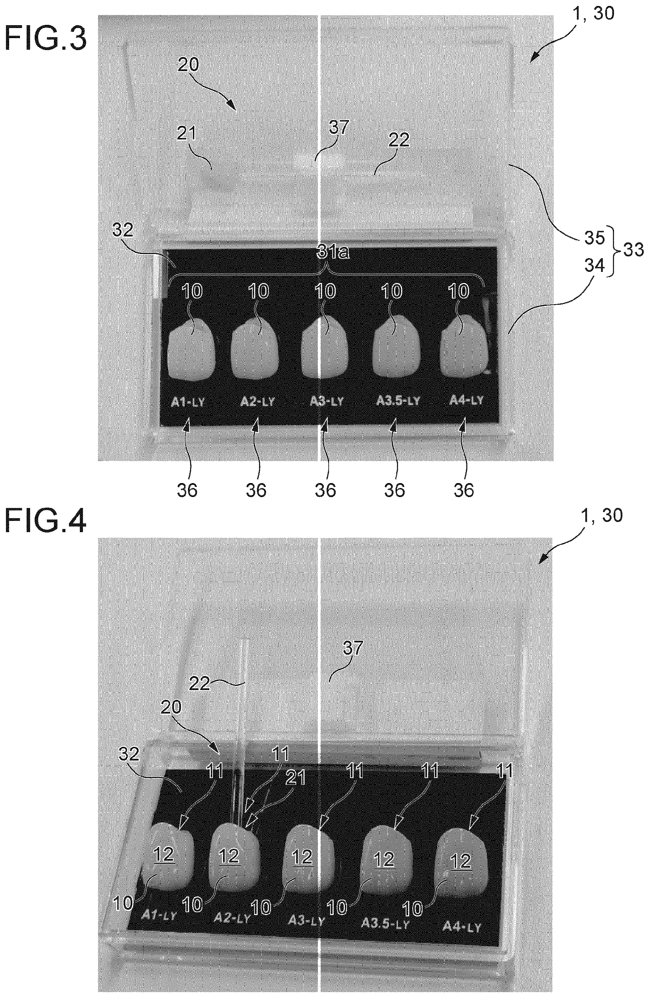

The demonstration instrument 30 shown in Figs. 3 and 4 (which are both photographs) is a representative form of the demonstration instrument 30 of the present invention, and includes an instrument kit 1, a plate 32, and a case 33. The instrument kit 1 of the present invention includes a combination of at least one crown sample 10 and at least one abutment tooth sample 20. The instrument kit 1 shown in Figs. 3 and 4 includes a first crown sample group 31a including a plurality of crown samples 10 and a single abutment tooth sample 20. Specifically, the first crown sample group 31a includes five crown samples 10 having shapes substantially identical to each other and having surface color patterns different from each other.

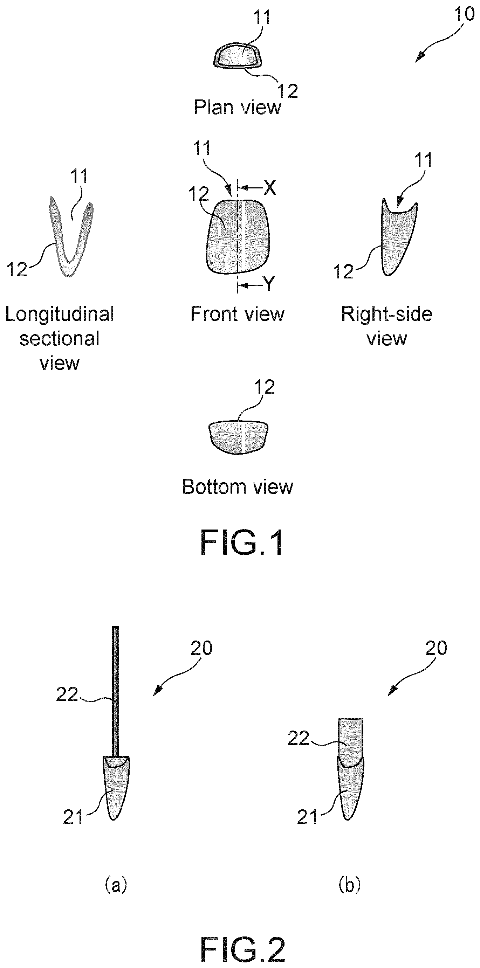

Here, the crown sample 10 is a sample processed into a standard shape of a crown, which is a tooth crown prosthesis used for inserting an abutment tooth into an open cavity thereof, and is configured as an exemplar of the crown. The crown sample 10 includes an open cavity 11 corresponding to the open cavity of the crown. Fig. 1 shows a front view, a plan view, a bottom view, a right-side view, and a longitudinal sectional view of a representative crown sample 10. In Fig. 1, the longitudinal sectional view shows a cross-section of the crown sample 10 along the XY line in the front view. In the crown sample 10, the open cavity 11 is configured as a cavity that is opened upward and closed laterally and downward. Further, the crown sample 10 has a surface 12 that is turned to the front when mounted onto an abutment tooth of a patient. Note that the crown sample 10 may be provided with, for example, a retaining unit as a pedestal for holding the crown sample 10 on the plate 32 in a predetermined state.

The crown sample 10 is usually manufactured by CAD/CAM using a milling block made of a non-metal material, and thus has a surface color pattern that reflects the color pattern of the milling block used. Here, in the present invention, the surface color pattern means a pattern of the appearance color of the surface and means a surface color pattern in a case where the entire color is a single color and a case where colors are separated by a plurality of specific different colors. In other words, the surface color pattern means the arrangement of colors on the surface, specifically, a colored pattern indicating which color occupies which portion of the surface if a plurality of colors are used, and includes a case where the entire surface has a single color. The surface color pattern of the crown sample 10 is favorably configured using a plurality of colors including a color corresponding to one selected from among 18 shades representing the color of a tooth.

Further, (a) and (b) of Fig. 2 respectively show right-side views of two types of representative abutment tooth samples 20. The abutment tooth sample 20 includes an abutment tooth portion 21 that is formed into a standard shape of an abutment tooth of a patient and configured as an exemplar of an abutment tooth made of an artificial material. The abutment tooth portion 21 has a shape and a size, which correspond to those of the open cavity 11 of the crown sample 10 and with which the abutment tooth portion 21 can be freely inserted into the open cavity 11, and also has a surface color pattern substantially identical to the color of the abutment tooth. If the abutment tooth portion 21 having a surface color substantially identical to the color of the abutment tooth of the patient is used, the appearance color of a crown when mounted onto the abutment tooth of the patient can be previously confirmed. The surface color pattern of the abutment tooth portion 21 is favorably configured using a plurality of colors including a color corresponding to one selected from among 18 shades representing the color of a tooth. Further, the abutment tooth sample 20 favorably includes a pinch portion 22. The pinch portion 22 extends from the abutment tooth portion 21 to the opposite side in the direction of insertion into the open cavity 11 of the crown sample 10. The pinch portion 22 enhances convenience in operating the abutment tooth sample 20. For example, the abutment tooth sample 20 can be manually freely operated when the pinch portion 22 is pinched with fingers. The shape of the pinch portion 22 is not particularly limited as long as the object described above can be achieved. For example, in the abutment tooth sample 20 shown in (a) of Fig. 2, the pinch portion 22 provided as a rod-shaped member separately from the abutment tooth portion 21 is attached to the abutment tooth portion 21. In the abutment tooth sample 20 shown in (b) of Fig. 2, the pinch portion 22 is integrally formed with the abutment tooth portion 21 and is provided in a convex piece shape protruding from the abutment tooth portion 21.

As described above, if HR blanks are sold as commodities, in many cases, a plurality of types of HR blanks having the same standard and being different from each other only in surface color pattern are prepared, and a plurality of grades of different shades (surface color patterns) are prepared and sold as a series of commodities, so that the surface color pattern can be selected for purchase. The demonstration instrument 30 shown in Figs. 3 and 4 includes the first crown sample group 31a including crown samples having shapes substantially identical to each other and surface color patterns different from each other, and thus is suitable as a tool for comparing the appearance colors of the HR blanks (when formed into crown and mounted) in each grade for the commodities as described above.

The instrument kit 1 shown in Figs. 3 and 4 includes a combination of the first crown sample group 31a including the five crown samples 10 and the single abutment tooth sample 20. The five crown samples 10 include the respective open cavities 11 having shapes identical or substantially identical to each other and having surface color patterns different from each other. The five crown samples 10 shown in Figs. 3 and 4 are each manufactured by using an E-M-D laminated HR milling block, in which the shades of the dentin layer D and the middle HR layer M are different from each other and the shades of the enamel layer E are identical to each other, so that the surface color patterns of the respective crown samples 10 also reflect such differences. Incidentally, the shades of the dentin layers D of the respective crown samples 10 are A1, A2, A3, A3.5, and A4 from the left side of the figure. Note that the number of crown samples 10 having the identical shape and different colors and constituting the first crown sample group 31a only needs to be 2 to 18 (note that the upper limit of 18 is obtained by adding the number of shades 2, which is called bleach shade and simulates whitening, to the number of VITA shades 16. Usually, comparison is often performed with the same system color or two system colors. In such cases, the number of crown samples 10 constituting the first crown sample group 31a is favorably 2 to 9, and particularly favorably 3 to 7.

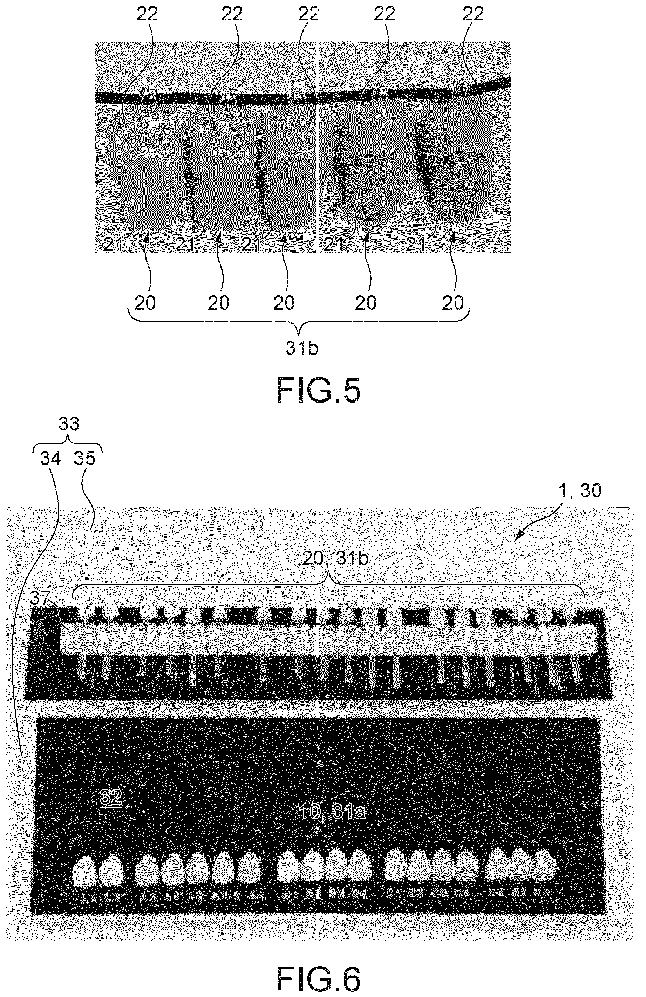

Further, the single abutment tooth sample 20 is used in the instrument kit 1 of the present invention in the mode shown in Figs. 3 and 4, but a first abutment tooth sample group 31b including two or more abutment tooth samples 20 having sizes and shapes identical or substantially identical to each other and having surface color patterns different from each other may be used. Fig. 5 is a view illustrating the first abutment tooth sample group 31b by an example. In the first abutment tooth sample group 31b shown in Fig. 5, the shades of the five abutment tooth samples 20 are A1, A2, A3, A3.5, and A4 from the left side of the figure. The five abutment tooth samples 20 constituting the first abutment tooth sample group 31b shown in Fig. 5 each have the configuration shown in (b) of Fig. 2. Further, in the first abutment tooth sample group 31b shown in Fig. 5, the five abutment tooth samples 20 are collectively held by a single string that passes through ring-shaped hook portions provided to the respective pinch portions 22.

Further, the plate 32 included in the demonstration instrument 30 functions as a mount for holding the crown samples 10 disposed side by side. The material of the plate 32 is not particularly limited, and hard paper, a synthetic resin such as polyethylene, polypropylene, acrylonitrile butadiene styrene (ABS resin), or polycarbonate, or a metal such as a stainless steel plate can be used. However, materials formed of a synthetic resin such as polypropylene are favorable because of easy processing, light weight, and no corrosion. Further, it is not necessarily required to be a plate-like member having high rigidity, and it may be a sheet-like member having flexibility. In the case of such a sheet-like member, it is favorably used by being laid in a rigid case 33 or the like. On the display surface, which is the main surface of the plate 32, the crown samples 10 are arranged and fixedly held in a state in which each crown sample 10 can receive insertion of the abutment tooth portion 21 of the abutment tooth sample 20 into the open cavity 11 without changing the posture. Specifically, the crown samples 10 are disposed and fixed with the respective open cavities 11 being opened upward in a manner that an appearance color of each crown sample 10 before and after the abutment tooth sample 20 is inserted is easily confirmed, that the front surface 12 on the front side of the crown sample 10 faces the front and the back surface thereof faces the display surface of the plate 32, and that the abutment tooth sample 20 can be freely (forward and backward) inserted into the open cavity 11 of the crown sample 10. The color of the plate 32 is not particularly limited, but it is favorably black or a dark color other than black in order to express the state of a color in the oral cavity.

The size of the plate 32 is appropriately determined according to the number of crown samples 10 to be held and an arrangement form thereof, and is usually 2 to 10 cm in length, 2 to 15 cm in width, and 0.1 to 5 mm in thickness, favorably 2.5 to 6 cm in length, 2.5 to 8 cm in width, and 0.3 to 2 mm in thickness. Further, it is favorable that the display surface of the plate 32 is provided with a caption display portion 36 for displaying information regarding the crown sample 10 to be held (for example, information for specifying the milling block used for manufacturing the crown sample by CAD/CAM, specifically, a trade name, a grade, a model number, and the like).

Holding the crown samples 10 on the display surface of the plate 32 is usually performed by bonding with an adhesive, but can also be performed by using holding means for detachably holding the crown samples 10. Use of such holding means makes it possible to appropriately replace the crown samples 10 to be compared with each other and hold the crown samples 10 on one plate 32. This is convenient when the comparison and confirmation are performed from various viewpoints within a short time. Usually, such holding means may be configured in a manner that holding means installed on the display surface of the plate 32 (one holding means) and holding means installed in the crown sample 10 (another holding means) are detachably provided as a set. Examples of the holding means include an adhesive tape, a hook-and-loop fastener, a snap button, and various one-touch connectors or one-touch joints.

For example, since the crown sample 10 is manufactured by CAD/CAM using a milling block to be a commodity and thus the color tone compatibility obtained when a crown manufactured from the commodity is actually mounted can be shown in demonstration, the demonstration instrument 30 according to this embodiment is useful as an advertisement tool or a sales promotion tool for the commodity. When the demonstration instrument 30 is used in such an application, it is favorable that the plate 32 holding the crown samples 10 and the abutment tooth sample 20 are housed in a dedicated case 33 as shown in Fig. 3. In the demonstration instrument 30 shown in Fig. 3, the case 33 has a configuration in which a case main body 34 and a lid portion 35 are connected to each other by a hinge so as to be openable and closable. In the case 33, a holding mechanism 37 for holding the abutment tooth sample 20 is provided inside the lid portion 35, and the plate 32 holding the crown samples 10 is housed in the case main body 34. As shown in Fig. 4, in the demonstration instrument 30, it is possible to insert the abutment tooth portion 21 of the abutment tooth sample 20 into the open cavity 11 of the crown sample 10 by pinching the pinch portion 22 with the lid portion 35 being opened (without taking out the plate 32). Note that in Fig. 4 the appearance color of the second crown sample 10 from the left, "A2-LY", (indicating that it is manufactured from an E-M-D laminated HR milling block in which the shade of D is A2) is changed to be slightly reddish after the abutment tooth portion 21 of the abutment tooth sample 20 is inserted, in comparison with the appearance color before the insertion.

The instrument kit 1 including the first crown sample group 31a including the five crown samples 10 and the single abutment tooth sample 20 has been described above, but the instrument kit 1 of the present invention is not limited thereto. For example, the abutment tooth sample 20 is prepared not as the single abutment tooth sample 20 but as the first abutment tooth sample group 31b in which the shapes of the abutment tooth portions 21 are substantially identical to each other and the surface color patterns of the abutment tooth portions 21 are different from each other as shown in Fig. 5, so that it is possible to confirm the appearance color when the crown is mounted onto the abutment tooth having various colors. Of course, the abutment tooth sample 20 constituting the first abutment tooth sample group 31b is not limited to have the configuration shown in (b) of Fig. 2 and may have the configuration shown in (a) of Fig. 2.

The instrument kit 1 constituting the demonstration instrument 30 shown in Fig. 6 uses the abutment tooth samples 20 each having the configuration shown in (a) of Fig. 2, in which 18 crown samples 10 having surface color patterns different from each other are set as the first crown sample group 31a, and further 18 abutment tooth samples 20 corresponding to the color tones of the respective crown samples 10 are set as the first abutment tooth sample group 31b in the dedicated case 33. As in the demonstration instrument 30 shown in Fig. 6, a large number of color tones are displayed as the crown samples 10 in the case main body 34 at a time, so that an operator can select the most suitable color tone for a patient. Further, the abutment tooth sample 20 corresponding to each color tone is held inside the lid portion 35, which makes it possible to select an exact color tone in a short time while taking into consideration the color tone of the abutment tooth of the patient. At that time, since it is possible to confirm a combination of different color tones between the crown and the abutment tooth, it is possible to smoothly cope with a patient's need for treatment using a whiter crown, for example. In the instrument kit 1 including the first crown sample group 31a and the first abutment tooth sample group 31b as shown in Fig. 6, it is favorable that the shapes of the open cavities 11 of the plurality of crown samples 10 constituting the first crown sample group 31a coincide with the shapes of the abutment tooth portions 21 of the plurality of abutment tooth samples 20 constituting the first abutment tooth sample group 31b on a one-to-one basis.

Further, the instrument kit 1 of the present invention may be configured to include a second crown sample group including a plurality of crown samples 10 having surface color patterns substantially identical to each other and having shapes different from each other, instead of the first crown sample group 31a or in addition to the first crown sample group 31a. Furthermore, the instrument kit 1 of the present invention may be configured to include a second abutment tooth sample group including a plurality of abutment tooth samples 20 in which abutment tooth portions 21 have surface color patterns substantially identical to each other and shapes different from each other, instead of the first abutment tooth sample group 31b or in addition to the first abutment tooth sample group 31b. In this case, the instrument kit 1 of the present invention can also have a mode in which the number of crown samples 10 constituting the second crown sample group and the number of abutment tooth samples 20 constituting the second abutment tooth sample group are set to be identical, and the shapes and sizes of the abutment tooth portions 21 of the plurality of abutment tooth samples 20 constituting the second abutment tooth sample group coincide with the shapes and sizes of the open cavities 11 of the plurality of crown samples 10 constituting the second crown sample group on a one-to-one basis. In other words, such an instrument kit 1 can also have a mode in which the plurality of crown samples 10 constituting the second crown sample group includes crown samples 10 including open cavities 11 having shapes corresponding to all the shapes of the abutment tooth portions 21 of the plurality of abutment tooth samples 20 constituting the second abutment tooth sample group. Use of the instrument kit 1 having such a mode makes it possible to know the influence of those factors on the appearance color at the time of mounting, for example, when crowns having different shapes or different thicknesses are manufactured from one type of HR milling block.

Furthermore, it is possible to provide a method of adopting a milling block to be used for forming a crown, which is a tooth crown prosthesis including an open cavity, by CAD/CAM using the instrument kit 1 of the present invention or the demonstration instrument 30 of the present invention. The method of adopting a milling block of the present invention includes a preparing step, a selecting step, a confirming step, and an adopting step. In the preparing step, the instrument kit 1 or demonstration instrument 30 that includes the first crown sample group 31a and the first abutment tooth sample group 31b is prepared. In the selecting step, an abutment tooth sample 20 including an abutment tooth portion 21 having a shape and a surface color pattern that are similar to those of an abutment tooth of a patient is selected from the first abutment tooth sample group 31b. In the confirming step, an appearance color is confirmed after the abutment tooth portion 21 of the abutment tooth sample 20 selected in the selecting step is inserted into the open cavity 11, for each of the plurality of crown samples 10 constituting the first crown sample group 31a. In the confirming step, for example, an image or image data obtained by imaging appearances of the plurality of crown samples 10 can be used, the image or image data being obtained before and after the abutment tooth portion 21 of the abutment tooth sample 20 is inserted into the open cavity 11 of each of the plurality of crown samples 10. In the adopting step, a crown sample 10 having the appearance color confirmed in the confirming step that best matches an appearance color of the tooth of the patient is determined from the plurality of crown samples 10 constituting the first crown sample group 31a, and a milling block that is substantially identical to a milling block used for forming the determined crown sample is adopted.

In addition, use of the instrument kit 1 of the present invention or the demonstration instrument 30 of the present invention makes it possible to provide a confirming method for an influence of a shape of an abutment tooth on an appearance color of a crown formed using a candidate milling block in adopting a milling block to be used for forming a crown by CAD/CAM, the crown being a tooth crown prosthesis including an open cavity into which the abutment tooth is to be inserted, in a stage in which a surface color pattern of a abutment tooth of a patient has been confirmed but a shape of the abutment tooth of the patient is undetermined. The confirming method of the present invention includes a preparing step and a confirming step. In the preparing step, the instrument kit 1 or demonstration instrument 30 including a second crown sample group and a second abutment tooth sample group is prepared, in which the surface color patterns of the abutment tooth portions 21 of the plurality of abutment tooth samples 20 constituting the second abutment tooth sample group are substantially identical to or similar to the surface color pattern of the abutment tooth, and the plurality of crown samples 10 constituting the second crown sample group are each formed using a milling block substantially identical to a candidate milling block. In the confirming step, the appearance color after the abutment tooth portion 21 of the abutment tooth sample 20 is inserted into the open cavity 11 is confirmed for each of combinations of the crown sample 10 and the abutment tooth sample 20, which respectively include the open cavity 11 and the abutment tooth portion 21 having shapes corresponding to each other and are respectively selected from the second crown sample group and the second abutment tooth sample group. In the confirming step, an image or image data obtained by imaging the appearances of the plurality of crown samples 10 can be used, the image or image data being obtained before and after the abutment tooth portion 21 of the abutment tooth sample 20 is inserted into the open cavity 11 of each of plurality of crown samples 10.

### Reference Signs List

- 1: instrument kit
- 10: crown sample
- 11: open cavity
- 12: surface
- 20: abutment tooth sample
- 21: abutment tooth portion
- 22: pinch portion
- 30: demonstration instrument
- 31a: first crown sample group
- 31b: first abutment tooth sample group
- 32: plate
- 33: case
- 34: case main body
- 35: lid portion
- 36: caption display portion
- 37: holding mechanism

## Claims

1. An instrument kit (1), comprising:
at least one abutment tooth sample (20) that is configured as an exemplar of an abutment tooth of a patient and includes an abutment tooth portion (21) formed into a standard shape of the abutment tooth; and
at least one crown sample (10) that is configured as an exemplar of a crown, the crown being a tooth crown prosthesis including an open cavity (11) into which the abutment tooth is to be inserted, the at least one crown sample (10) being formed into a standard shape of the crown and including an open cavity (11) corresponding to the abutment tooth portion (21) of the abutment tooth sample (20), wherein
the instrument kit (1) includes at least one of a plurality of abutment tooth samples (20) or a plurality of crown samples (10),
the plurality of abutment tooth samples (20) constitutes at least one of a first abutment tooth sample group (31b) or a second abutment tooth sample group, the first abutment tooth sample group (31b) including the abutment tooth portions (21) having shapes substantially identical to each other and having surface color patterns different from each other, the second abutment tooth sample group including the abutment tooth portions (21) having surface color patterns substantially identical to each other and having shapes different from each other, and
the plurality of crown samples (10) constitutes at least one of a first crown sample group (31a) or a second crown sample group, the first crown sample group (31a) including the crown samples (10) having shapes substantially identical to each other and having surface color patterns different from each other, the second crown sample group including the crown samples (10) having surface color patterns substantially identical to each other and having shapes different from each other.

2. The instrument kit (1) according to claim 1, wherein
the surface color patterns of the at least one abutment tooth sample (20) and the at least one crown sample (10) are configured using a plurality of colors including a color corresponding to one selected from 18 shades representing a color of a tooth.

3. The instrument kit (1) according to claim 1, wherein
the at least one crown sample (10) is formed by the CAD/CAM using a milling block that is made of a hybrid resin or ceramics.

4. The instrument kit (1) according to claim 1, wherein
the at least one abutment tooth sample (20) further includes a pinch portion that extends from the abutment tooth portion (21) to an opposite side in a direction of insertion into the open cavity (11).

5. The instrument kit (1) according to claim 1, wherein
the instrument kit (1) includes the first abutment tooth sample group (31b) and the first crown sample group (31a), and
the shapes of the abutment tooth portions (21) of the plurality of abutment tooth samples (20) constituting the first abutment tooth sample group (31b) coincide with the shapes of the open cavities (11) of the plurality of crown samples (10) constituting the first crown sample group (31a) on a one-to-one basis.

6. The instrument kit (1) according to claim 1, wherein
the instrument kit (1) includes the second abutment tooth sample group and the second crown sample group, and
the plurality of crown samples (10) constituting the second crown sample group includes crown samples (10) including the open cavities having shapes corresponding to all the shapes of the abutment tooth portions (21) of the plurality of abutment tooth samples (20) constituting the second abutment tooth sample group.

7. A method of adopting a milling block to be used for forming a crown by computer-aided design, CAD, / computer-aided manufacturing, CAM, the crown being a tooth crown prosthesis including an open cavity (11), the method comprising:
preparing the instrument kit (1) according to claim 5;
selecting, from the first abutment tooth sample group (31b), an abutment tooth sample (20) including an abutment tooth portion (21) having a shape and a surface color pattern that are similar to a shape and a surface color pattern of an abutment tooth of a patient;
inserting the abutment tooth portion (21) of the abutment tooth sample (20) selected in the selecting step into the open cavity (11) of each of the plurality of crown samples (10) and, thereby, confirming an appearance color after the abutment tooth portion (21) of the abutment tooth sample (20) selected in the selecting step is inserted into the open cavity (11), for each of the plurality of crown samples (10) constituting the first crown sample group (31a); and
determining, from the plurality of crown samples (10) constituting the first crown sample group (31a), a crown sample (10) having the appearance color confirmed in the confirmation step that best matches an appearance color of the tooth of the patient, and adopting a milling block that is substantially identical to a milling block used for forming the determined crown sample (10).

8. The method of adopting a milling block according to claim 7, wherein in the confirming step, an image or image data obtained by imaging appearances of the plurality of crown samples (10) is used, the image or image data being obtained before and after the abutment tooth portion (21) of the abutment tooth sample (20) is inserted into the open cavity (11) of each of the plurality of crown samples (10).

9. A method for determining a shape of an open cavity of a crown, the crown being a tooth crown prosthesis including an open cavity (11) and being formed by computer-aided design, CAD, / computer-aided manufacturing, CAM, using a milling block, the method comprising:
preparing the instrument kit (1) according to claim 6, in which the surface color patterns of the abutment tooth portions (21) of the plurality of abutment tooth samples (20) constituting the second abutment tooth sample group are substantially identical to or similar to a surface color pattern of the abutment tooth, and the plurality of crown samples (10) constituting the second crown sample group are each formed using a milling block substantially identical to the candidate milling block; and
inserting the abutment tooth portion (21) of the abutment tooth sample (20) selected in the selecting step into the open cavity (11) of each of the plurality of crown samples (10) and, thereby, confirming the appearance color after the abutment tooth portion (21) of the abutment tooth sample (20) is inserted into the open cavity (11), for each of combinations of the crown sample (10) and the abutment tooth sample (20), respectively, including the open cavity (11) and the abutment tooth portion (21) having shapes corresponding to each other and respectively selected from the second crown sample group and the second abutment tooth sample group; and
determining, from among combinations of the crown sample (10) and the abutment tooth sample (20) for which the appearance color has been confirmed, a combination in which the appearance color most closely matches an appearance color of a tooth of a patient, and determining a shape of the open cavity of a crown to be formed by CAD/CAM using a milling block based on a shape of the open cavity of the crown sample in the determined combination.

10. The method for determining according to claim 9, wherein in the confirming step, an image or image data obtained by imaging an appearance of the crown sample (10) is used, the image or image data being obtained before and after the abutment tooth portion (21) of the abutment tooth sample (20) is inserted into the open cavity (11) of the crown sample (10).

## Patentansprüche

1. Instrumentensatz (1), umfassend:
mindestens ein Stützzahnmuster (20), das als Musterbeispiel eines Stützzahns eines Patienten ausgebildet ist und einen Stützzahnabschnitt (21) aufweist, der in einer Standardform des Stützzahns ausgebildet ist; und
mindestens ein Kronenmuster (10), das als Musterbeispiel für eine Krone ausgebildet ist, wobei die Krone eine Zahnkronenprothese ist, die einen offenen Hohlraum (11) aufweist, in den der Stützzahn eingesetzt werden soll, wobei die mindestens ein Kronenmuster (10) in einer Standardform der Krone ausgebildet ist und einen offenen Hohlraum (11) aufweist, der dem Stützzahnabschnitt (21) des Stützzahnmusters (20) entspricht, wobei
der Instrumentensatz (1) mindestens eines aus einer Vielzahl von Stützzahnmustern (20) oder einer Vielzahl von Kronenmustern (10) umfasst,
die Vielzahl von Stützzahnmustern (20) mindestens eine einer ersten Stützzahnmustergruppe (31b) oder einer zweiten Stützzahnmustergruppe bildet, wobei die erste Stützzahnmustergruppe (31b) die Stützzahnabschnitte (21) umfasst, die im Wesentlichen identische Formen aufweisen und sich in ihren Oberflächenfarbmustern voneinander unterscheiden, wobei die zweite Stützzahnmustergruppe die Stützzahnabschnitte (21) umfasst, die im Wesentlichen identische Oberflächenfarbmuster und voneinander abweichende Formen aufweisen, und
die Vielzahl von Kronenmustern (10) mindestens eine erste Kronenmustergruppe (31a) oder eine zweite Kronenmustergruppe bildet, wobei die erste Kronenmustergruppe (31a) die Kronenmuster (10) umfasst, die im Wesentlichen identische Formen und voneinander unterschiedliche Oberflächenfarbmuster aufweisen, wobei die zweite Kronenmustergruppe die Kronenmuster (10) umfasst, die im Wesentlichen identische Oberflächenfarbmuster und voneinander abweichende Formen aufweisen.

2. Instrumentensatz (1) nach Anspruch 1, wobei
die Oberflächenfarbmuster des mindestens einen Stützzahnmusters (20) und des mindestens einen Kronenmusters (10) unter Verwendung einer Vielzahl von Farben gestaltet werden, darunter eine Farbe, die einer von 18 Farbtönen entspricht, welche die Farbe eines Zahns darstellen.

3. Instrumentensatz (1) nach Anspruch 1, wobei
das mindestens eine Kronenmuster (10) durch das CAD/CAM unter Verwendung eines Fräsblocks gebildet wird, der aus einem Hybridharz oder Keramik besteht.

4. Instrumentensatz (1) nach Anspruch 1, wobei
das mindestens eine Stützzahnmuster (20) ferner einen Griffabschnitt aufweist, der sich vom Stützzahnabschnitt (21) zu einer gegenüberliegenden Seite in einer Einführrichtung in den offenen Hohlraum (11) erstreckt.

5. Instrumentensatz (1) nach Anspruch 1, wobei
der Instrumentensatz (1) die erste Stützzahnmustergruppe (31b) und die erste Kronenmustergruppe (31a) umfasst, und
die Formen der Stützzahnabschnitte (21) der mehreren Stützzahnmuster (20), die die erste Stützzahnmustergruppe (31b) bilden, eins zu eins mit den Formen der offenen Hohlräume (11) der mehreren Kronenmuster (10) übereinstimmen, die die erste Kronenmustergruppe (31a) bilden.

6. Instrumentensatz (1) nach Anspruch 1, wobei
der Instrumentensatz (1) die zweite Stützzahnmustergruppe und die zweite Kronenmustergruppe umfasst, und
die Vielzahl von Kronenmustern (10), die die zweite Kronenmustergruppe bilden, Kronenmuster (10) umfasst, die offene Hohlräume mit Formen aufweisen, die allen Formen der Stützzahnabschnitte (21) der Vielzahl von Stützzahnmustern (20) entsprechen, die die zweite Stützzahnmustergruppe bilden.

7. Verfahren zur Auswahl eines Fräsblocks zur Herstellung einer Krone mittels computergestützter Konstruktion (CAD) und computergestützter Fertigung (CAM), wobei die Krone eine Zahnkrone mit einem offenen Hohlraum (11) ist, wobei das Verfahren umfasst:
Vorbereiten des Instrumentensatzes (1) gemäß Anspruch 5;
Auswählen eines Stützzahnmusters (20) aus der ersten Stützzahnmustergruppe (31b), die einen Stützzahnabschnitt (21) mit einer Form und einem Oberflächenfarbmuster umfasst, die der Form und dem Oberflächenfarbmuster eines Stützzahns eines Patienten ähnlich sind;
Einführen des Stützzahnabschnitts (21) des im Auswahlschritt ausgewählten Stützzahnmusters (20) in den offenen Hohlraum (11) jedes der mehreren Kronenmuster (10) und dadurch Bestätigen einer Farberscheinung, nachdem der Stützzahnabschnitt (21) des im Auswahlschritt ausgewählten Stützzahnmusters (20) in den offenen Hohlraum (11) eingesetzt wurde, für jedes der mehreren Kronenmuster (10), die die erste Kronenmustergruppe (31a) bilden; und
Bestimmen eines Kronenmusters (10) aus der Vielzahl von Kronenmuster (10), die die erste Kronenmustergruppe (31a) bilden, wobei dieses Kronenmuster (10) die im Bestätigungsschritt bestätigte Erscheinungsfarbe aufweist, die am besten mit einer Erscheinungsfarbe des Zahns des Patienten übereinstimmt,
und Verwenden eines Fräsblocks, der im Wesentlichen identisch mit einem Fräsblock ist, der zur Herstellung des bestimmten Kronenmusters (10) verwendet wird.

8. Verfahren zum Auswählen eines Fräsblocks gemäß Anspruch 7, wobei im Bestätigungsschritt ein Bild oder Bilddaten verwendet wird bzw. werden, das oder die durch Abbilden des Aussehens der mehreren Kronenmuster (10) erhalten wurden, wobei das Bild oder die Bilddaten vor und nach dem Einsetzen des Stützzahnabschnitts (21) der Stützzahnmuster (20) in den offenen Hohlraum (11) jeder der mehreren Kronenmuster (10) erhalten wurden.

9. Verfahren zur Bestimmung der Form eines offenen Hohlraums einer Krone, wobei die Krone eine Zahnkrone ist, die einen offenen Hohlraum (11) aufweist und mittels computergestützter Konstruktion (CAD) und mittels computergestützter Fertigung (CAM) unter Verwendung eines Fräsblocks hergestellt wird, wobei das Verfahren umfasst:
das Vorbereiten des Instrumentensatzes (1) gemäß Anspruch 6, wobei die Oberflächenfarbmuster der Stützzahnabschnitte (21) der mehreren Stützzahnmuster (20), die die zweite Stützzahnmustergruppe bilden, im Wesentlichen identisch mit oder ähnlich einem Oberflächenfarbmuster des Stützzahns sind, und die mehreren Kronenmuster (10), die die zweite Kronenmustergruppe bilden, jeweils unter Verwendung eines Fräsblocks geformt sind, der im Wesentlichen mit dem Kandidaten-Fräsblock identisch ist; und
Einführen des Stützzahnabschnitts (21) des im Auswahlschritt ausgewählten Stützzahnmusters (20) in den offenen Hohlraum (11) jedes der mehreren Kronenmuster (10) und dadurch Bestätigen der Erscheinungsfarbe, nachdem der Stützzahnabschnitt (21) des Stützzahnmusters (20) in den offenen Hohlraum (11) eingeführt wurde, für jede der Kombinationen aus Kronenmuster (10) und Stützzahnmuster (20), wobei jeweils der offene Hohlraum (11) und der Stützzahnabschnitt (21) Formen aufweisen, die einander entsprechen und jeweils aus der zweiten Kronenmustergruppe und der zweiten Stützzahnmustergruppe ausgewählt wurden; und
Ermitteln einer Kombination aus den Kombinationen des Kronenmusters (10) und des Stützzahnmusters (20), bei denen die Farberscheinung bestätigt wurde, wobei diese Kombination die Farberscheinung aufweist, die der Farberscheinung eines Zahnes eines Patienten am ehesten entspricht, sowie Ermitteln einer Form des offenen Hohlraums einer mittels CAD/CAM aus einem Fräsblock herzustellenden Krone auf der Grundlage der Form des offenen Hohlraums des Kronenmusters in der ermittelten Kombination.

10. Verfahren zur Bestimmung gemäß Anspruch 9, wobei
im Bestätigungsschritt ein Bild oder Bilddaten verwendet werden, die durch Abbilden eines Erscheinungsbildes des Kronenmusters (10) erhalten wurden, wobei das Bild oder die Bilddaten vor und nach dem Einsetzen des Stützzahnabschnitts (21) des Stützzahnmusters (20) in den offenen Hohlraum (11) des Kronenmusters (10) erhalten wurden.

## Revendications

1. Kit d'instruments (1), comprenant :
au moins un échantillon de dent pilier (20) conçu pour servir de modèle à une dent pilier d'un patient et comportant une partie de dent pilier (21) ayant la forme standard d'une dent pilier ; et
au moins un échantillon de couronne (10) configuré comme un exemplaire d'une couronne, la couronne étant une prothèse dentaire comprenant une cavité ouverte (11) dans laquelle la dent pilier doit être insérée, ledit au moins un échantillon de couronne (10) étant formé selon une forme standard de la couronne et comprenant une cavité ouverte (11) correspondant à la partie dent pilier (21) de l'échantillon de dent pilier (20), dans lequel
le kit d'instruments (1) comprend au moins l'un d'une pluralité d'échantillons de dents piliers (20) ou d'une pluralité d'échantillons de couronnes (10),
la pluralité d'échantillons de dents piliers (20) constitue au moins l'un d'un premier groupe d'échantillons de dents piliers (31b) ou d'un deuxième groupe d'échantillons de dents piliers, le premier groupe d'échantillons de dents piliers (31b) comprenant les parties de dent pilier (21) ayant des formes sensiblement identiques les unes aux autres et présentant des motifs de couleur de surface différents les uns des autres, le deuxième groupe d'échantillons de dents piliers comprenant les parties de dent pilier (21) ayant des motifs de couleur de surface sensiblement identiques les uns aux autres et ayant des formes différentes les unes des autres, et
la pluralité d'échantillons de couronnes (10) constitue au moins l'un d'un premier groupe d'échantillons de couronnes (31a) ou un deuxième groupe d'échantillons de couronnes, le premier groupe d'échantillons de couronnes (31a) comprenant les échantillons de couronnes (10) ayant des formes sensiblement identiques les unes aux autres et présentant des motifs de couleur de surface différents les uns des autres, le deuxième groupe d'échantillons de couronnes comprenant les échantillons de couronnes (10) ayant des motifs de couleur de surface sensiblement identiques les uns aux autres et présentant des formes différentes les unes des autres.

2. Le kit d'instruments (1) selon la revendication 1, dans lequel
les motifs de couleur de surface de l'au moins un échantillon de dent pilier (20) et de l'au moins un échantillon de couronne (10) sont configurés à l'aide d'une pluralité de couleurs comprenant une couleur correspondant à l'une choisie parmi 18 teintes représentant la couleur d'une dent.

3. Le kit d'instruments (1) selon la revendication 1, dans lequel
l'au moins un échantillon de couronne (10) est formé par la technologie CAO/FAO à l'aide d'un bloc de fraisage constitué d'une résine hybride ou de céramique.

4. Le kit d'instruments (1) selon la revendication 1, dans lequel
l'au moins un échantillon de dent pilier (20) comprend en outre une partie de pincement qui s'étend de la partie dent pilier (21) vers un côté opposé dans une direction d'insertion dans la cavité ouverte (11).

5. Le kit d'instruments (1) selon la revendication 1, dans lequel
le kit d'instruments (1) comprend le premier groupe d'échantillons de dents piliers (31b) et le premier groupe d'échantillons de couronnes (31a), et
les formes des parties de dent d'appui (21) de la pluralité d'échantillons de dents d'appui (20) constituant le premier groupe d'échantillons de dents d'appui (31b) coïncident avec les formes des cavités ouvertes (11) de la pluralité d'échantillons de couronnes (10) constituant le premier groupe d'échantillons de couronnes (31a) sur une base de un à un.

6. Le kit d'instruments (1) selon la revendication 1, dans laquelle
le kit d'instruments (1) comprend le deuxième groupe d'échantillons de dents piliers et le deuxième groupe d'échantillons de couronnes, et
la pluralité d'échantillons de couronnes (10) constituant le deuxième groupe d'échantillons de couronnes comprend des échantillons de couronnes (10) comportant des cavités ouvertes dont les formes correspondent à toutes les formes des parties de dents piliers (21) de la pluralité d'échantillons de dents piliers (20) constituant le deuxième groupe d'échantillons de dents piliers.

7. Procédé d'adoption d'un bloc de fraisage destiné à être utilisé pour former une couronne par conception assistée par ordinateur (CAO) / fabrication assistée par ordinateur (FAO), la couronne étant une prothèse dentaire comprenant une cavité ouverte (11), le procédé comprenant :
préparer le kit d'instruments (1) selon la revendication 5 ;
sélectionner, parmi le premier groupe d'échantillons de dents piliers (31b), un échantillon de dent pilier (20) comprenant une partie de dent pilier (21) ayant une forme et un motif de couleur de surface similaires à la forme et au motif de couleur de surface d'une dent pilier d'un patient ;
insérer la partie dent pilier (21) de l'échantillon de dent pilier (20) sélectionné lors de l'étape de sélection dans la cavité ouverte (11) de chacun des multiples échantillons de couronne (10) et, de ce fait, la confirmation d'une couleur d'aspect après que la partie dent pilier (21) de l'échantillon de dent pilier (20) sélectionné lors de l'étape de sélection a été insérée dans la cavité ouverte (11), pour chacun des échantillons de couronne (10) constituant le premier groupe d'échantillons de couronne (31a) ; et
déterminer, parmi la pluralité d'échantillons de couronnes (10) constituant le premier groupe d'échantillons de couronnes (31a), un échantillon de couronne (10) présentant la couleur d'aspect confirmée lors de l'étape de confirmation qui correspond le mieux à une couleur d'aspect de la dent du patient, et adopter un bloc de fraisage qui est sensiblement identique à un bloc de fraisage utilisé pour former l'échantillon de couronne déterminé (10).

8. Le procédé d'adoption d'un bloc de fraisage selon la revendication 7, dans lequel
dans l'étape de confirmation, on utilise une image ou des données d'image obtenues par imagerie des apparences de la pluralité d'échantillons de couronnes (10), l'image ou les données d'image étant obtenues avant et après l'insertion de la partie dent de pilier (21) de l'échantillon de dent de pilier (20) dans la cavité ouverte (11) de chacun des échantillons de couronnes (10).

9. Procédé de détermination d'une forme d'une cavité ouverte d'une couronne, la couronne étant une prothèse dentaire comprenant une cavité ouverte (11) et étant formée par conception assistée par ordinateur (CAO) et fabrication assistée par ordinateur (FAO) à l'aide d'un bloc de fraisage, le procédé comprenant :
préparer le kit d'instruments (1) selon la revendication 6, dans lequel les motifs de couleur de surface des parties de dent pilier (21) de la pluralité d'échantillons de dents piliers (20) constituant le deuxième groupe d'échantillons de dents piliers sont sensiblement identiques ou similaires à un motif de couleur de surface de la dent pilier, et la pluralité d'échantillons de couronnes (10) constituant le deuxième groupe d'échantillons de couronnes sont chacun formés à l'aide d'un bloc de fraisage sensiblement identique au bloc de fraisage candidat ; et
insérer la partie dent pilier (21) de l'échantillon de dent pilier (20) sélectionné lors de l'étape de sélection dans la cavité ouverte (11) de chacun des multiples échantillons de couronne (10) et, ce faisant, confirmer la couleur d'aspect après l'insertion de la partie dent pilier (21) de l'échantillon de dent pilier (20) dans la cavité ouverte (11), pour chacune des combinaisons de l'échantillon de couronne (10) et de l'échantillon de dent pilier (20), respectivement, comprenant la cavité ouverte (11) et la partie dent pilier (21) ayant des formes correspondant l'une à l'autre et respectivement sélectionnées parmi le deuxième groupe d'échantillons de couronnes et le deuxième groupe d'échantillons de dents piliers ; et
déterminer, parmi les combinaisons de l'échantillon de couronne (10) et de l'échantillon de dent pilier (20) pour lesquelles la couleur d'aspect a été confirmée, une combinaison dans laquelle la couleur d'aspect correspond le plus étroitement à une couleur d'aspect d'une dent d'un patient, et déterminer une forme de la cavité ouverte d'une couronne à former par CAO/FAO à l'aide d'un bloc de fraisage sur la base d'une forme de la cavité ouverte de l'échantillon de couronne dans la combinaison déterminée.

10. Le procédé de détermination selon la revendication 9, dans lequel
lors de l'étape de confirmation, on utilise une image ou des données d'image obtenues par imagerie de l'aspect de l'échantillon de couronne (10), l'image ou les données d'image étant obtenues avant et après l'insertion de la partie dent pilier (21) de l'échantillon de dent pilier (20) dans la cavité ouverte (11) de l'échantillon de couronne (10).
